# NEW EUROPEAN PATENT SPECIFICATION

(11) **EP 1 895 740 B2**
(45) Date of publication and mention of the opposition decision: **26.07.2023**
(45) Mention of the grant of the patent: 27.05.2015
(21) Application number: 07114841.5
(22) Date of filing: 23.08.2007
(51) Int. Cl.: G05B 19/05, H04L 67/12

(54) **Structured data support using metadata and a type library in a control system**
Unterstützung strukturierter Daten durch Metadaten und eine Schrifttypenbibliothek in einem Steuersystem
Support de données structurées utilisant des métadonnées et une bibliothèque de type dans un système de contrôle

(30) Priority: 28.08.2006 US 467851
(43) Date of publication of application: 05.03.2008
(73) Proprietor: Rockwell Automation Technologies, Inc., Mayfield Heights, OH 44124 (US)
(72) Inventor: Davitt, Robert E., Northfiled, OH 44067 (US); Jasper, Taryl J., South Euclid, OH 44121 (US); Shearer, Jeffrey A., North Royalton, OH 44133 (US); Hall, Kenwood H., Hudson, OH 44236 (US); Kalan, Michael D., Highland Heights, OH 44143 (US)
(74) Representative: Grünecker Patent- und Rechtsanwälte PartG mbB

(56) References cited:
- US-A1- 2003 018 978
- US-A1- 2006 184 532
- US-B1- 6 621 505

## Description

The claimed subject matter relates to use of metadata in connection with industrial automation.

Advancements in computer technology and software have enabled communication to occur almost instantaneously. For example, through email an individual in New York can receive a document, image, message, or the like from an individual in California in a matter of seconds. Such advances in technology are not limited solely to communications, but directly or indirectly affect every business and individual. For instance, industrial control systems have enabled modern factories to become partially or completely automated in many circumstances, thereby reducing costs associated with the factory and consequently passing on such cost reduction to a consumer.

To further reduce costs of production, industrial systems have become increasingly automated. For example, programmable logic controllers (PLCs) can be coupled to various machinery and control a process that requires precise timing between actions of such machinery. In many cases, these PLCs can be controlled programmatically from a higher-level system through an interface provided by the PLC. However, these interfaces are simple in functionality and complex in understanding, such that employing a programmer who can interpret a provided interface can become expensive and yield very limited results due to the simplicity of the interface. For example, conventional PLCs can only store simple data types and have limited capabilities for creating data structures. In order to programmatically access structured data retained within the PLC, the programmer must know (schematically) how such structured data is stored in the PLC before attempting to write software to parse data received from such PLC.

Similarly, structured data on one PLC may be stored in a different manner than structured data on a disparate PLC. This complicates the programming process such that a programmer must determine the storage scheme for each PLC upon attempting to utilize data in an associated PLC. Moreover, if a change is made to the structure of structured data in a PLC, the programmer may have to change and recompile an accessing program in order to accommodate the change.

US-B1-6 621 505 relates to computer tools for designing and implementing integrated enterprise processes on computer systems using standardized screens. Processes may be represented using metadata. Metadata may provide data to a screen rendering process running on a users workstation with details on how to render one of a plurality of standard screens in a manner which is specific to a particular process. A client/server system architecture allows maintenance of the computer processes in a central location and remote management of the use within a network. The server retrieves process metadata from the metadata database and packages the process metadata based on the selected process.

The invention is what is defined in the independent claim.

The following presents a simplified summary of the claimed subject matter in order to provide a basic understanding of some aspects described herein. This summary is not an extensive overview, and is not intended to identify key/critical elements or to delineate the scope of the claimed subject matter. Its sole purpose is to present some concepts in a simplified form as a prelude to the more detailed description that is presented later.

The claimed subject matter comprises storing metadata associated with simple data types and data structures within an industrial controller and packaging such metadata given a traditional data query made by another device in an industrial control environment. Adding metadata about simple types and structures allows obtainment of rich information about the underlying structured data requested by a certain device. Through analysis of the metadata packaged with the simple data types/structures, a requesting device/entity can make intelligent decisions - such as how to display structured data, data conversion decisions, including selecting certain units of measure, decisions relating to converting data in order to interface with high-level structured programming languages, etc.

Metadata associated with an industrial controller can comprise, but is not limited to, the following data: a system name of a data type or structure; the definition and/or layout of a data structure; a localized or native language name for the data type or structure; a localized description of the type or structure; a revision or version level for the type or structure; faceplates employable by a human machine interface (HMI), man machine interface (MMI), and/or any software that can display values associated with an industrial controller; any conversion information as mentioned above; and documentation information.

In an example, once stored within an industrial controller, a structured data type and associated metadata can be transmitted to a type library (which may or may not be centralized). It is to be appreciated that the type library can be resident within the controller - such that multiple programmers can utilize real-time modifications made by other programmers - or external to the controller in a centralized location. The type library can track and store all of the structured data types and associated metadata utilized in a particular industrial control environment. This functionality allows enterprise-wide policies to be created and implemented with respect to data in an industrial controller. Devices wishing to access an industrial controller may be configured to solely use types that are specified within the type library. Thus, standardized programming practice with respect to the industrial controllers can be ensured. Additionally, if a structure has been added or modified within a controller, a software engineer who may not be familiar with methods for communicating directly with an industrial controller can retrieve information about the added or changed data type simply by accessing the metadata for the structured type in the type library. Also, real-time changes to underlying structured data, once accounted for in the metadata, can be seamlessly reflected in existing programs that utilize the metadata to interpret the structure of the data.

To the accomplishment of the foregoing and related ends, certain illustrative aspects of the claimed subject matter are described herein in connection with the following description and the annexed drawings. These aspects are indicative, however, of but a few of the various ways in which the principles of the claimed subject matter can be employed and such subject matter is intended to include all such aspects and their equivalents. Other advantages and novel features will become apparent from the following detailed description of the claimed subject matter when considered in conjunction with the drawings.

### BRIEF DESCRIPTION OF THE DRAWINGS

Fig. 1 is a high-level block diagram of an industrial controller that facilitates storing structured data types and associated metadata.
Fig. 2 is a block diagram of an industrial controller that facilitates storing structured data types and associated metadata and receiving requests for data from a disparate industrial controller.
Fig. 3 is a block diagram of an industrial controller that facilitates storing structured data types and associated metadata and receiving requests for data from a device employing a high-level programming language.
Fig. 4 is an example of a structured data type and associated metadata that includes underlying data available in an industrial controller and metadata that can be associated with such existing data.
Fig. 5 is a block diagram of an industrial controller that facilitates remotely storing structured data types and associated metadata.
Fig. 6 is a block diagram of an industrial controller that facilitates locally storing structured data types and associated metadata.
Fig. 7 is a block diagram of an example machine interface that can display controller information on a face-plate querying a centralized type library.
Fig 8. is a block diagram of system that utilizes an application programming interface (API) in the type library to obtain information about a structured data types and associated metadata.
Fig. 9 illustrates an example type library.
Fig. 10 illustrates a system that enables packaging of metadata with simple data types with respect to a legacy device according to the invention.
Fig. 11 illustrates an industrial controller that facilitates limiting access to metadata or data.
Fig. 12 is a representative flow diagram illustrating a methodology for creating and associating metadata with a data structure in an industrial controller.
Fig. 13 is a representative flow diagram illustrating a methodology for querying an industrial controller for data.
Fig. 14 is a representative flow diagram illustrating a methodology for creating a namespace in a type library and storing metadata and data type information associated with the namespace.
Fig. 15 is a representative flow diagram illustrating a methodology for providing security with respect to data in an industrial controller.
FIG. 16 is an example computing environment.
FIG. 17 is an example networking environment.

### DETAILED DESCRIPTION

The claimed subject matter is now described with reference to the drawings, wherein like reference numerals are used to refer to like elements throughout. In the following description, for purposes of explanation, numerous specific details are set forth in order to provide a thorough understanding of the claimed subject matter. It may be evident, however, that such matter can be practiced without these specific details. In other instances, well-known structures and devices are shown in block diagram form in order to facilitate describing the claimed subject matter.

As used in this application, the terms "component" and "system" are intended to refer to a computer-related entity, either hardware, a combination of hardware and software, software, or software in execution. For example, a component may be, but is not limited to a process running on a processor, a processor, an object, an executable, a thread of execution, a program, and a computer. By way of illustration, both an application running on a server and the server can be a component. One or more components may reside within a process and/or thread of execution and a component may be localized on one computer and/or distributed between two or more computers.

Furthermore, aspects of the claimed subject matter may be implemented as a method, apparatus, or article of manufacture using standard programming and/or engineering techniques to produce software, firmware, hardware, or any combination thereof to control a computer to implement various aspects of the claimed subject matter. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., card, stick, key drive, etc.). Additionally it should be appreciated that a carrier wave can be employed to carry computer-readable electronic data such as those used in transmitting and receiving electronic mail or in accessing a network such as the Internet or a local area network (LAN). Of course, those skilled in the an will recognize many modifications may be made to this configuration without departing from the scope or spirit of what is described herein.

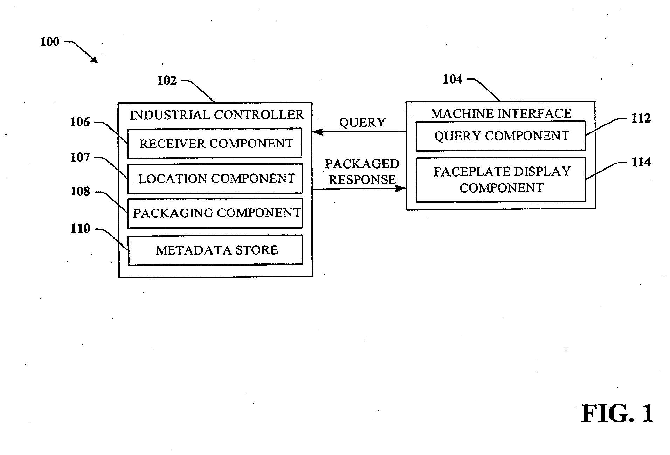

Referring now to the drawings, Fig. 1 illustrates a system 100 that facilitates packaging data within an industrial controller with metadata upon a receipt of a request for such data. The system 100 includes an industrial controller 102 that receives a query for data retained therein from a machine interface 104. The machine interface 104 can be, for example, a software application that interfaces with the industrial controller 102 to enable programming thereof and/or retrieval of data therefrom. In another example, the machine interface 104 can be an application program interface (API) that enables a first machine/device to communicate with the industrial controller 102. The industrial controller 102 includes a receiver component 106 that receives and processes the query for data from the machine interface 104. The system employs a location component 107 to locate the metadata associated with the data requested in the query. A packaging component 108 gathers structured data retained within the industrial controller 102 with metadata within a metadata store 110 upon receipt of the request from the machine interface 104 and transmits the data to the requesting machine interface 104. Optionally, the packaging component 108 can append the metadata to the requested data. The metadata within the metadata store 110 can be associated with the structured data types available in the industrial controller 102. The machine interface includes a query component 112 that initiates a query to request structured data from the industrial controller 104 and a face-plate display component 114 that is configured to display data received from the industrial controller 102 on a graphical faceplate, thereby enabling a more user-friendly and robust interface (that can present more than merely raw numbers).

In an example, the machine interface 104 initiates a query to request data from the industrial controller 102 based at least in part on a demand from a higher level entity, such as another program or a human interacting with the machine interface 104. The query is initiated by the query component 112 and transmitted to the industrial controller 102 through any suitable communications medium, including by way of the Internet, through a wired or wireless connection, over ControlNET, DeviceNET, or any other suitable industrial communications protocol. The receiver component 104 of the industrial controller 102 receives the query and analyzes it to determine underlying data being sought by the machine interface 104. For instance, such determination can be made by the location component 107, which can then access the metadata store 110 to retrieve metadata associated with the requested structured data. The packaging component 108 can gather the metadata and the structured data and transmit them to the machine interface 104. Optionally, the packaging component 108 can also append metadata to the structured data, the resultant data is transmitted back to the machine interface 104. One the machine interface 104 has received the data, it can utilize the metadata (packaged with the structured data) to contextualize the structured data. The metadata can include, for example, appropriate faceplates employable by the faceplate display component 114 to robustly display the structured data. Moreover, the machine interface 104 can utilize the metadata to correctly determine a structure of the structured data. In an example, the faceplate display component 114 can map named fields (offered in the metadata that correspond to the structured data) to slots on the faceplate. Therefore, in the event the structure of the data is modified, the face-plate display component 114 can map the values to proper slots based on the metadata (which may additionally need to be updated). It is to be appreciated that requests for metadata need not be generated from an external entity and can be accessed and leveraged internally by the controller.

In another example, the machine interface 104 can utilize metadata associated with a query response to properly convert data where the measurements are stored in units different from those desired. For instance, the industrial controller 102 can store structured data in metric units and provide conversions to English units within the metadata (or vice versa) such that the faceplate display component 114 can employ an English unit face-plate and use the metadata to convert to English units if needed.

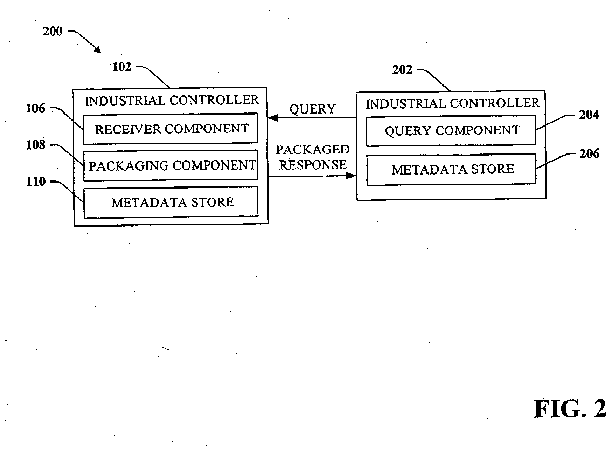

Now referring to Fig. 2, a system 200 that facilitates exchange of data between industrial controllers is illustrated. The system 200 includes the industrial controller 102 and another industrial controller 202, wherein such controllers 102 and 202 can be robotic controllers, programmable logic controllers, or any other suitable industrial controllers. The industrial controller 202 includes a query component 204 that generates a query to the industrial controller 102, wherein the query can be a request for particular structured data. The industrial controller 202 can also include a metadata store 206 that retains metadata associated with structured types available in the industrial controller 202. The responding industrial controller 102 includes the receiver component 106 that receives and processes the incoming query and the metadata store 110 that stores metadata related to structured data available in the controller. The responding industrial controller 102 additionally includes the packaging component 108 that packages associated metadata with requested structured data, which is subsequently sent to the querying industrial controller 202.

The querying controller 202 can request actual data from the industrial controller 102 (as described with respect to the machine interface 104 (not shown)). In another example, the querying controller 202 can seek information regarding data structures and associated metadata within the industrial controller 102 in order to similarly configure itself to contain data types and structures as are utilized by the industrial controller 102. In doing so, the querying controller 202 can formulate a query for some data and transmit the query over to the responding controller 102. The receiver component 106 receives and processes the query, and the packaging component 108 can access the metadata store 108 to gather related metadata. Such metadata is appended to the underlying structured data in the packaging component 108 and such combination of data is transmitted back to the querying controller 202. Once the information arrives, the querying controller 202 can have knowledge of how to unpack the data to discern which portion is underlying structured data and which is metadata. Such knowledge can be preprogrammed in firmware, can be existent within received metadata, and/or the like. Additionally, the querying controller 202 can store retrieved metadata in its metadata store 206 in order to mitigate manual configuration of the controller 202.

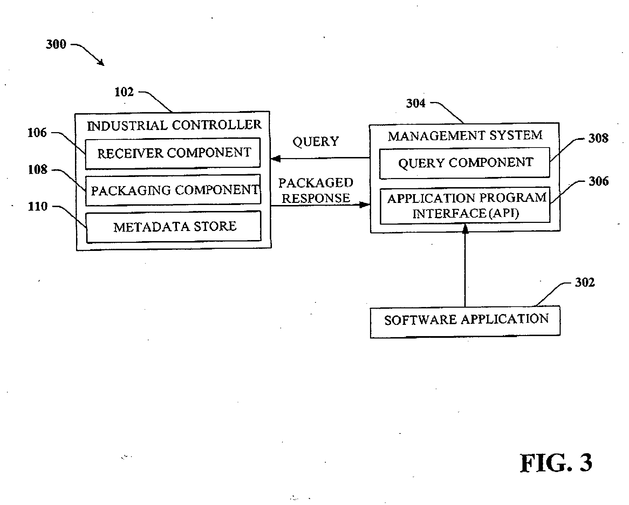

Turning now to Fig. 3, a system 300 that facilitates accessing data and associated metadata and providing it to a management system is illustrated. The system 300 includes a software application 302 that is accessing structured data and associated metadata of an industrial controller 102 by employing a management system 304. The management system 304 can be a manufacturing execution system (MES), for instance. The management system 304 includes an application program interface (API) 306 that is accessible by the software application 302 to perform queries on the industrial controller 102 *via* a query component 308. The industrial controller 102 comprises the receiver component 106 that receives and processes the query, thereby determining data that the management system desires. The industrial controller 102 additionally includes the metadata store 110 that retains metadata associated with structured data types available in the industrial controller 102. As described above, the packaging component 108 can be employed to append appropriate metadata to requested structured data.

The software application 302 can employ the API 306 of the management system 304 to access data from the industrial controller 102. The software application 302 accesses this data by making a call to the API 306, wherein the call identifies which data the application 308 is requesting and the query component 308 can translate the request into a query and submit the query to the industrial controller 102. The receiver component 106 processes the query, and, after determining requested structured data, the packaging component 108 can collect metadata associated with the requested structured data and append the metadata to the structured data. The resulting data is submitted to the management system 304. The management system 304 can forward the packaged response to the software application 302. This transaction is not limited to a serialized transaction and could be implemented as a concurrently processing call back function. The software application 302 can utilize the metadata to determine structure of the structured data, to determine desirable manners of conversion with respect to units of measure or to other data structure types, *etc*. In an example, the metadata can be employed to convert data from a structure normally used in an industrial control environment (*e.g.*, ladder logic) to one that can be used in high-level structured programming languages such as C++, Java, as a .NET object, *etc*.

In another example, the industrial controller 102 can include an API such that the software application 302 can access the industrial controller 102 directly without use of the management system 304. However, employing the management system 304 may provide for standardizing communication protocols for other software applications, and can add a level of security such that a software application does not directly access the industrial controller 102. Prohibiting direct access can aid in connection with prevention of hacking, system malfunction, or other undefined results that can occur as a result of components being directly coupled. Also, the management system 304 may comprise a task scheduling component to ensure efficient operation of the industrial controller 102 by minimizing flooded requests and interrupts, such that removing the management system 304 to allow the software application 302 to access the controller 102 directly can lead to undesirable results (malicious or mistaken denial of service attacks, etc.).

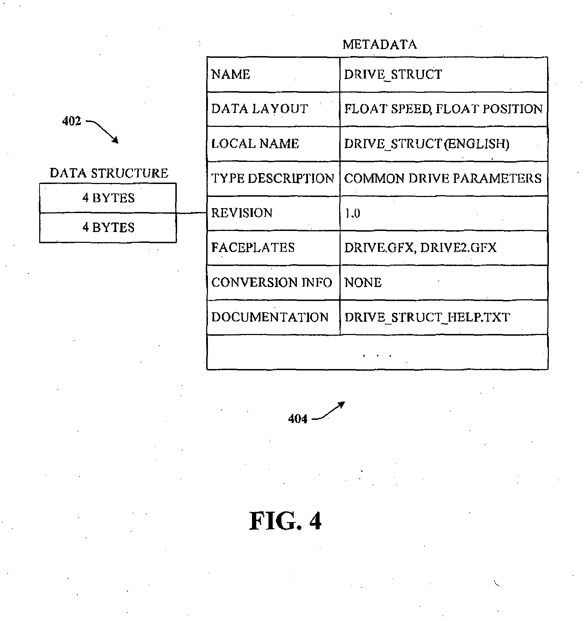

Referring now to Fig. 4, a structured data type 402 and associated metadata 404 is illustrated. The example metadata 404 includes entries of name-value pairs. Conventionally, industrial controllers generate, receive, and interpret only simple types and data structures (*e.g.*, data structure 402), and there is currently no functionality for storing information within the controller to identify the makeup of the structure 402 such as described above. The result of a query in connection with a conventional controller is retrieval of a value of the example structure 402 comprising 8 bytes (4+4) of data with no indication of what the data represents or that the data needs to be separated to be properly interpreted. Thus, systems today wishing to interpret this data must rely on outside sources (other systems, documentation, etc.) to obtain information on how to interpret data received. Moreover, conventional data structures are statically linked to the outside identifying information such that if changes are made to the structure, any components accessing this data must also change (which typically requires recompilation and/or redistribution). It is to be appreciated that upon upload of the metadata to the controller, such metadata is retrievable in full allowing projects to be recreated using the original or modified version of the information.

Also, by retaining metadata 404 within the con-trailer and/or associating metadata with the controller and appending such metadata to outgoing data requests, systems accessing the controller will now have some context on how the underlying data can be interpreted. It can be recognized that accessing systems may be in need of guidance with respect to separating the metadata from the structured data and interpreting the metadata. However, this information can be consistent among all structures and types allowing the structures and types themselves to be more malleable. Since a system accessing a controller can employ a single method to separate and identify metadata 404 from structured data, the system can become more powerful adapting to these structures by utilizing the metadata. For example, if a controller implemented a new measurable value and included it in a preexisting data structure, an accessing system, by utilizing the metadata 404, can automatically add the new value to a display without requiring recompilation or redistribution. Additionally, systems connected to the controller can be notified in real-time of changes made to the metadata; upon receiving such notification, the systems can properly account for the changes.

The metadata 404 can contain many name-value pairs. Name-value pairs consist of an identifier and an associated value. For example, in the metadata 404 example, the names are in the first column and corresponding values are in the second column. Interpreting this structure, a system employing the functionality disclosed herein can look at the "data lookup" name in the metadata structure, for example, and retrieve the value of "float speed, float position." This information can subsequently be used to put comprehensible structure with the underlying structured data structure wherein the system now knows that the first 4 bytes are of a float type representing the speed, and the second 4 bytes are also of float type representing the position in the example in Fig. 4. Additionally, stored metadata information can include instructions relating to conversion of one structured data type to another structured data type, thereby allowing a machine interface, for example, to employ other types of structures to interpret the data such that data irrelevant to the aim of the machine interface is not included in the structure. Also, security can be enhanced through packaging and employment of metadata. For instance, in a drive structure for a piece of motorized machinery, the structure can offer speed and position as accessible data. The machine interface can convert this structure to a structure that displays only position if the speed information was to be hidden from the user.

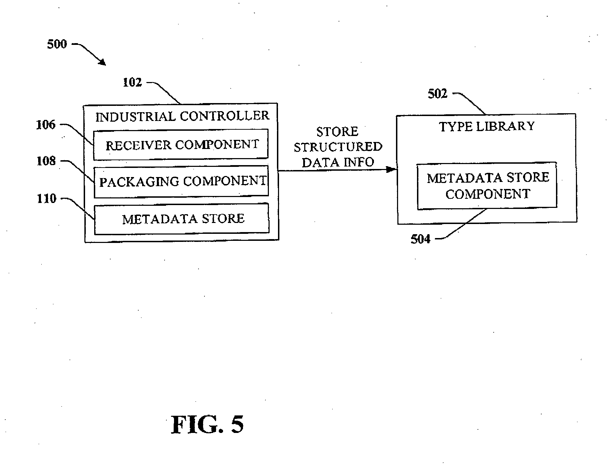

Referring now to Fig. 5, a system 500 that facilitates pushing information about a structured data type and associated metadata to a type library is illustrated. For instance, the type library can be a centralized type library, resident within a controller, and/or the like. The system 500 includes the industrial controller 102, which can include the receiver component 106, the metadata store 110 that comprises metadata associated with underlying structured data types available in the industrial controller 102, and the packaging component 108 that combines the metadata and the structured data. The system 500 additionally includes a type library 502, which may exist in a "centralized" location with respect to an industrial environment, resident within an industrial controller, or in any other suitable location. For example, the type library 502 can be resident upon a server that is accessible to at least a majority of industrial computing devices. In another example, the type library 502 may be existent within a controller. The type library 502 includes a data store component 504 that stores structured data types with associated metadata and allows other systems to access this information. In an example, the packaging component 108 packages a structured data type with its associated metadata from the metadata store 110. The structured data type and associated metadata can then be transferred to the type library 502, which retains the data in the data store component 504. This operation can be performed upon a new type being created in the industrial controller 102, an existing type if the industrial controller 102 is being modified or has been subject to modification, or a type being erased from the industrial controller 102.

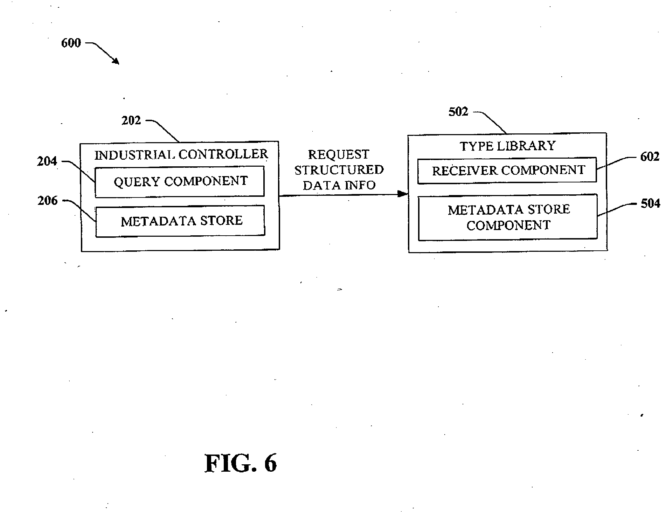

Referring now to Fig. 6, a system 800 that facilitates configuration of an industrial controller is illustrated. The system 600 includes the industrial controller 202 (Fig. 2), which can access the type library 502. The Industrial controller 202 includes the query component 204 that generates a query that is utilized for requesting data from the type library 502. The industrial controller 202 can also include the metadata store 206 that retains metadata associated with underlying structured data types available in the industrial controller 202. The type library 502 includes an interface component 602 that receives and processes queries from industrial controllers (and/or other industrial devices) and a data store component 504 that structured data types and associated metadata. In an example, the industrial controller 202 is desirably configured because, for example, it may be a new controller that needs some associated metadata for a new type, may have been flashed and needs to be restored to a prior state, etc. By utilizing the type library 502 to configure the industrial controller 202, a system designer can be assured that the controller 202 is being configured through use of standard valid data types and associated metadata that have been collected from other controllers in the environment. In the example system 600, the query component 204 can create a query for particular data, wherein the query may be for one specific data type and associated metadata, for multiple types and associated metadata, and/or any other suitable query. After the query is generated, it is transmitted to the type library 502 where it is received by the interface component 608 which can interpret the query. The type library 502 gathers the relevant information about the structured data type and associated metadata and transmits it back to the industrial controller 202. The industrial controller 202 can store the metadata in its metadata store 206, thereby enabling configuration of the controller 202 without requiring programmer time and/or effort.

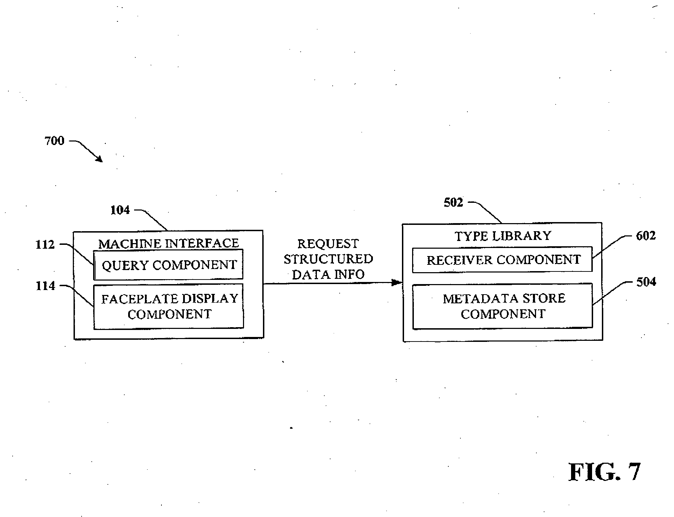

Turning now to Fig. 7, a system 700 that facilitates configuring a machine interface, such as a human machine interface, is illustrated. The system 700 includes the machine interface 104, which can include the query component 112. The query component 112 can generate a query that requests structured data and associated metadata from the type library 502. The type library 502 includes the interface component 602 that receives and processes the query created by the query component 112. The type library 502 also includes the data store component 504 that retains structured data types and associated metadata that may be used by a machine interface (such as an HMI), an industrial controller, or other suitable industrial device. The query generated by the query component 112 can be formed to ensure that standard data types are being employed (and to avoid manual configuration of the machine interface 104). Additionally, efficiency associated with the industrial controller can be enhanced by allowing the machine interface 104 to alternatively query the industrial controller only for structured data, and query the type library f502 or metadata associated with the retrieved structured data, resulting in avoidance of lengthy data transfer interrupts initiated on the industrial controller.

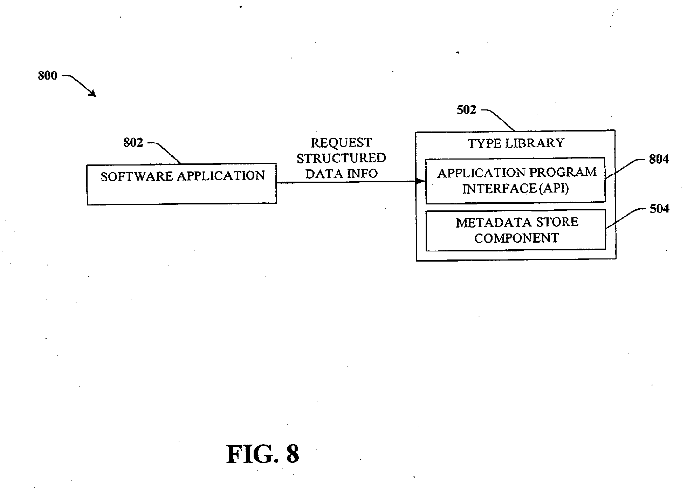

Now referring to Fig. 8, a system 800 that facilitates configuring a software application is illustrated. The system 800 includes a software application 802 that can access structured data and associated metadata from the type library 502. The software application 802 can be written in any language that can employ an application program interface (API) 804 offered by the type library 502. The type library 502 includes the API 804 and the metadata store component 504 that stores data types of a number of industrial controllers as well as metadata associated with those data types. The software application 802, desiring to retrieve information for a given structured data type or metadata for a given data type available in an industrial controller can communicate with the type library 502 using the application program interface 804. Upon receiving a call from the software application 802, the type library 502 accesses the requested information from the data store component 504 and sends it back to the software application 802.

Allowing direct communication between the software application and the type library allows for standardized data types among several applications 802 that are attempting to access controllers (without need for manual configuration). Additionally, the application 802 is not forced to communicate directly with industrial controllers which could result in a communication gap due to different protocols and operating systems. Also, enabling the application 802 to utilize the type library 502 allows for a more secure environment, as the type library 502 can employ security profiles associated with the data and an accessing program. Furthermore, security information can be placed in metadata in the controller. Then when the controller transmits the metadata to the type library 502, the type library 502 can employ methods to interpret the security metadata and create security profiles associated with the data for subsequent data access requests.

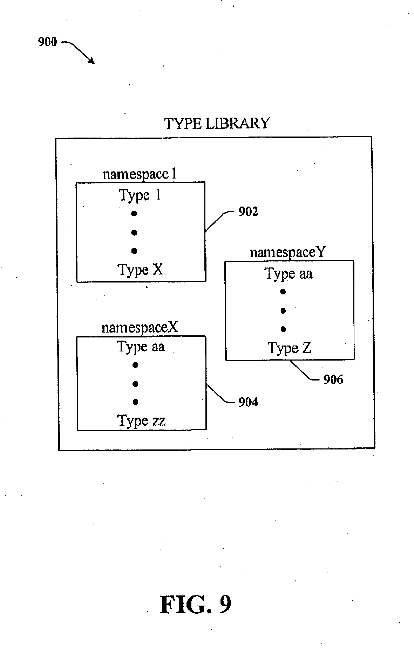

Referring to Fig. 9, an example type library 900 is illustrated. The type library 900 can reside within an industrial controller, at a centralized server, and/or another suitable location. For instance, the type library 900 can employ various namespaces 902, 904, and 906 to provide context for certain data types. By implementing a namespace system, metadata for disparate industrial controller data types and structures may exist using a similar name, thereby allowing system designers to use the best possible name for a given type without worrying about infringing on other type names. In the type library 900, a system designer can create a namespace 902, 904, and 906 for certain levels of abstraction. In an example, the level of abstraction is per industrial controller type. Once the namespace is created, metadata for associated types combined with the structured data type can be stored with useful naming conventions. Since the metadata is namespaced, a designer can create appropriately named metadata entries for a given controller.

For example, a namespace can be created for an industrial controller associated with a mechanical arm. This industrial controller may include a data structure for a motor, wherein the data structure is associated with values for speed, direction, etc. Associated metadata can be stored in the type library for this structure with a name of, for example, "motor_struct." This metadata entry can be stored in a mechanical arm namespace. Subsequently, a namespace can be created for an industrial controller that is charged with controlling a conveyor belt. Similarly, the controller can utilize a data structure for a motor that includes values for speed, direction, etc. A metadata entry in the type library 502 (Fig. 5) can be created as "motor_struct" and coexist in the library 502 with other "motor_struct" data entries but under a different namespace created for the industrial controller that is utilized to control the conveyor belt. This is illustrated with respect to "Type aa" of namespaceX 904 and namespaceY 906 in the example type library 900. Allowing varying levels of abstraction through the use of namespacing provides for increased organization amongst data types and more efficient structured application development of associated software applications. It is to be appreciated that the type library can have an associated graphical user interface for authorized users to manually manipulate (e.g. update, delete, add) the structured data types and associated metadata in the library. Also, the type library can employ a tool that uses the definition of a type in the type library and generate a corresponding NET type within an assembly. The corresponding NET type can present the members of the original type as get and set functions. Moreover, the type library can create a relational database table which can represent the members of a universal data type (UDT) as columns or fields in the table. This table can be subsequently utilized for data logging transactions.

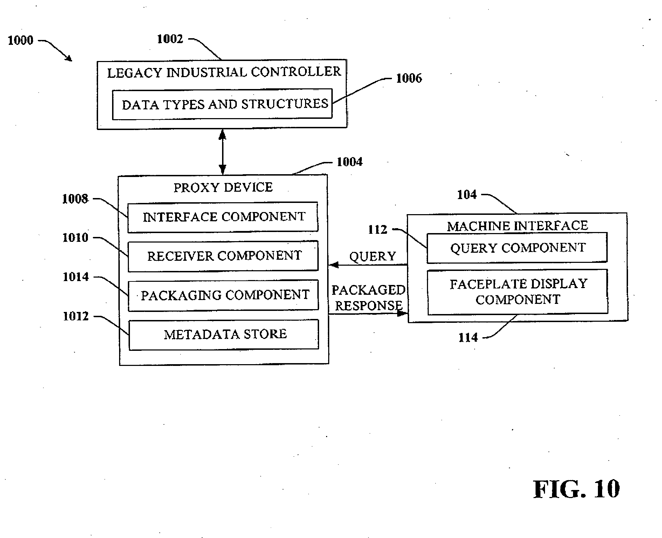

Now turning to Fig. 10, a system 1000 according to the invention that facilitates configuring legacy devices is illustrated. The system 1000 includes a legacy industrial controller 1002 mat is not associated with an ability to read and interpret metadata. While illustrated as a controller, the legacy industrial controller 1002 can be any suitable industrial device/software application. The system 1000 additionally includes a proxy component 1004 that stores metadata associated with underlying data types and structures 1006 that are existent within the legacy industrial controller 1002. The proxy component 1004 can be utilized to enable the machine interface 104 to query for metadata. While shown as being communicatively coupled to the machine interface 104, it can be understood that the proxy component 1004 can be communicatively coupled to a software application, an API, another industrial controller, and/or the like. Also, the proxy component 1004 can communicate with a type library fc store and retrieve associated metadata to facilitate automatic configuration of the industrial controller 1002.

The legacy industrial controller 1002 can include the structured data types 1006. The proxy component 1004 is communicatively coupled to the legacy controller 1002 and includes an interface component 1008 to enable communications to be undertaken between the legacy industrial controller 1002 and the machine interface 104. For instance, the interface component 1008 can convert data from a simple data type that can be interpreted and output by the legacy industrial controller 1002 to a hierarchically structured data type (which may be utilized by the machine interface 104, other controllers on a factory floor, ...). The proxy component 1004 can additionally include a receiver component 1010 that receives and processes queries from the machine interface 104 and a metadata store 1012 that houses metadata associated with structured data types that can be employed by the legacy industrial controller 1002 and/or the machine interface 102. The proxy component 1004 also includes a packaging component 1014 that appends structured data types available in the industrial controller 1002 with metadata associated with the types and structures (wherein the metadata can aid in configuring devices, displaying entities on an HMI, outputting data to a user or software application, etc.).

In an example, the machine interface 104 can query the legacy industrial controller 1002 for data that will be utilized in connection with an HMI provided to an operator. The proxy component 1004 can receive the request at the receiver component 1010 and provide such request to the interface component 1008. The interface component 1008 can then retrieve data from the legacy industrial controller 1002 according to the query and can receive results of such query. The packaging component 1014 can access appropriate metadata form the metadata store 1012 and append it to the data received from the controller 1002, and then provide the machine interface 104 with the packaged response. Upon receiving the packaged data, the faceplate display component 114 can interpret the metadata to employ appropriate faceplates to utilize in connection with displaying the data in a user-friendly fashion. Further, the machine interface 104 can use the metadata to identify the structure of the structured data received from the proxy component 1004, Again, the proxy component 1004 can be employed to handle functionality described herein such that the controller 1012 that cannot normally due to technical limitations associated therewith.

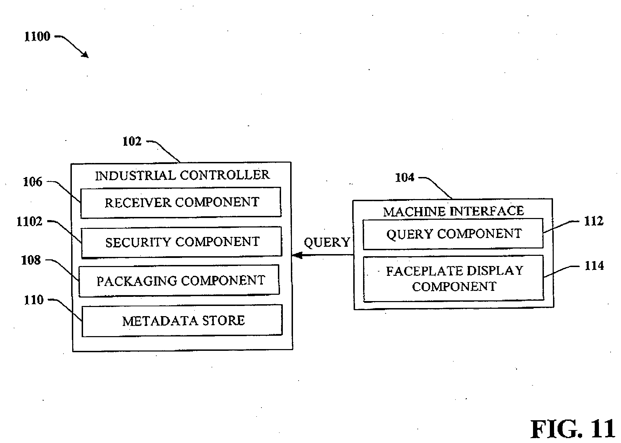

Now referring to Fig. 11, a system 1100 that facilitates regulating access to data retained within a controller is illustrated. The system 1100 includes the industrial controller 102, which can comprise the receiver component 106, the packaging component 108, and the metadata store 110, the functionalities of which have been described above. The industrial controller 102 additionally includes a security component 1102 that regulates access to contents of the controller 102, including to contents of the metadata store 110 as well as programmatic logic. For example, the security component 1102 can analyze digital signatures, personal identification numbers, usernames, passwords, biometric indicia (such as a user's voice, fingerprint, etc.).

In an example, the query component 112 generates a query to request data from the industrial controller 102. Once the query is sent, the receiver component 104 processes the query to determine the data that the machine interface 102 is requesting. Once this is determined, the industrial controller 102 consults the security component 1102 to determine if the machine interface and/or a user thereof is authorized to access the metadata associated with the requested data, the requested data, etc. In yet another example, rather than the machine interface 104 requesting data, another industrial controller, a software application, and/or another suitable industrial entity can request data from the industrial controller 102. If the requesting entity (e.g., the machine interface 104) and/or operator associated therewith is not authorized to receive requested data or associated metadata, notification can be sent to the requesting entity and the request terminates. If the machine interface 104 is authorized to receive the requested structured data and associated metadata, the metadata store 110 is accessed by the packaging component 108, and the packaging component 108 associates the structured data with the metadata and provides the resulting data to the requesting entity (the machine interface 104). In another example, security information can be retained within the metadata store 108, and security metadata can be utilized to make security decision. As described above, the face-plate display component 114 can utilize the metadata to employ a proper faceplate to display the data.

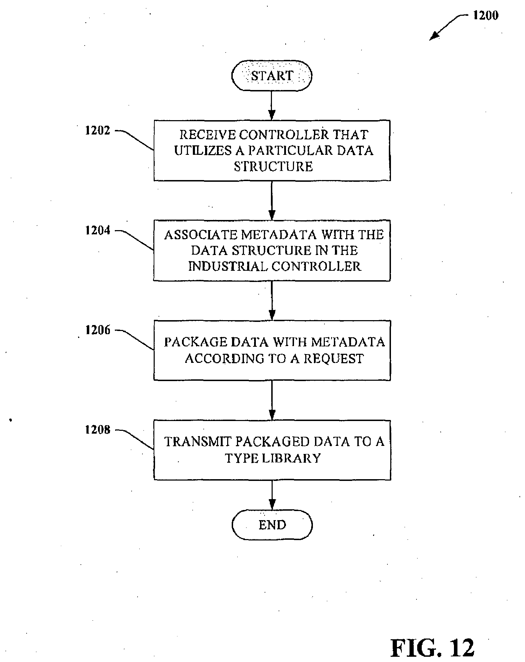

Referring to Figs. 12-15, methodologies in accordance with various aspects of the claimed subject matter are illustrated. While, for purposes of simplicity of explanation, the methodologies are shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Turning specifically to Fig. 12, a methodology 1200 for configuring an industrial automation system and/or device is illustrated. At 1202, a controller is received that utilizes a particular structured data type to effectuate control of a process and/or provision of data to a user, HMI, and/or the like. At 1204, metadata is associated with the structured data type within the industrial controller. For example, the metadata can be retained at a central location, in a proxy device associated with the controller, and/or within the controller itself. At 1206, structured data is packaged together with metadata, wherein the package is initiated by receipt of a query for data. For instance, the query can originate from another controller, a software application, a user, an HMI, a machine interface, etc. The package of structured data and associated metadata can then be provided to the requesting entity. At 1208, the data is transmitted to a type library, such that it can later be employed by other entities within an industrial environment (and to update a list of available types).

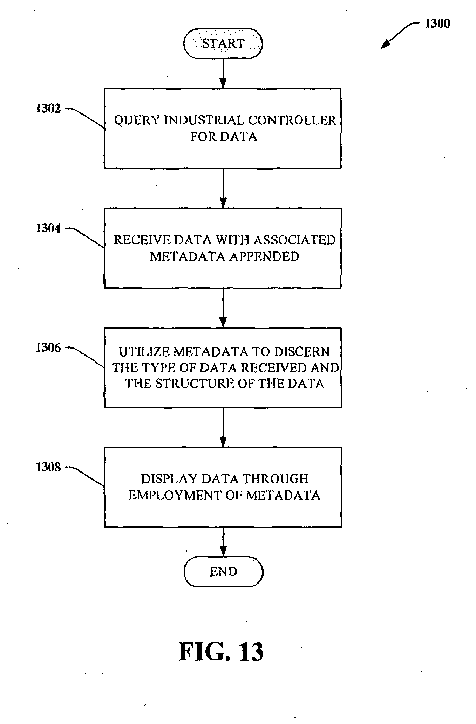

With reference now to Fig. 13, a methodology 1300 for accessing metadata within an industrial device is illustrated. At 1302, an industrial controller (or other suitable device) is queried for particular data, such as data that conforms to a particular data structure or data type. At 1304, the requested data and metadata associated therewith is received. For example, the industrial controller can package the data with the metadata before transmittal. The receiving entity can then separate the data from the metadata if desired, and at 1306 can utilize the metadata to ascertain information relating to type of data received and/or structure of such data. At 1308, data is displayed through employment of the metadata. For instance, the metadata can be utilized to select an appropriate faceplate, to generate an HMI, and/or the like.

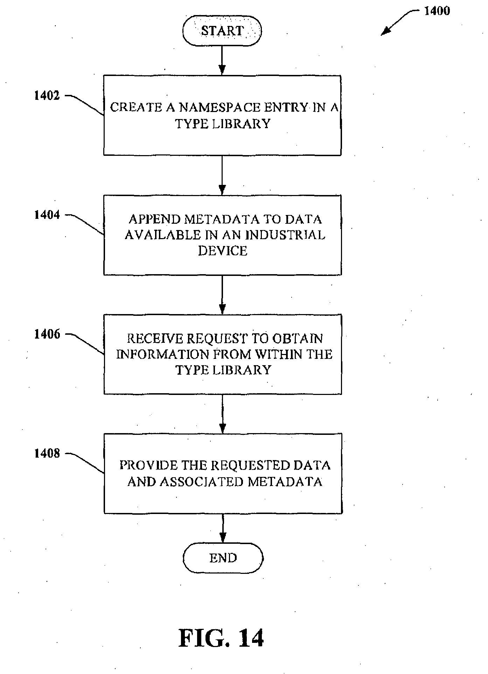

Referring to Fig. 14, a method 1400 for providing a structured data type and associated metadata to a requesting entity through use of a type library is illustrated. At 1402, a namespace entry is created in the type library based upon a desirable level of abstraction. In an example, the level of abstraction is per industrial controller. Once the namespace is created, at 1404 metadata associated with data available in the industrial controller can be appended to data available in the industrial controller which is then stored within that namespace. For instance, the metadata associated with available data of the industrial controller can have a name descriptive of the underlying data to aid in organizing data. Once the metadata is stored, it is accessible by another industrial device, such as a controller, a machine interface, *etc*. At 1406, a request is received at the type library to obtain Information therein, wherein the namespace can be specified for certain controllers or other devices. Then at 1408, the type library provides particular metadata to the requesting entity, which subsequently employ that data to make intelligent decisions or appropriately permeate the data.

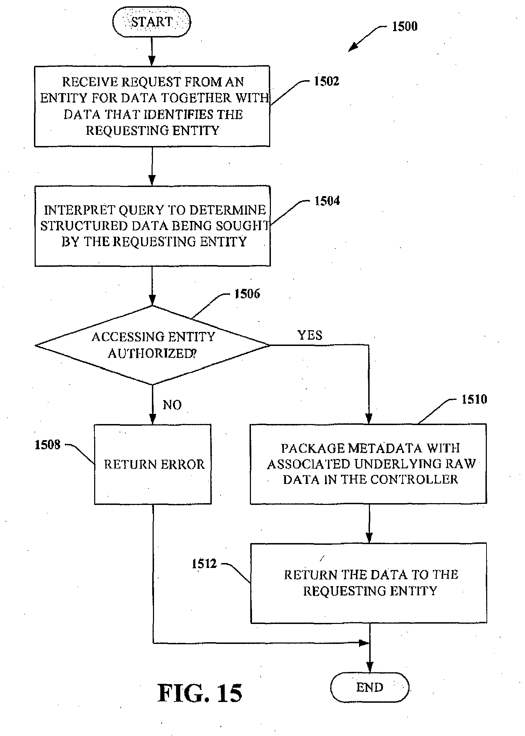

Turning now to Fig. 15, a method 1500 for ensuring that an entity (user, device, *etc*.) is authorized to access data or metadata associated therewith is illustrated. At 1502, a request from the entity for data within an industrial controller, a type library, and/or the like is received along with information that can uniquely identify the entity, such as a device identifier, a username, *etc*. In an example, the request can be in the form of a query. At 1504, the query is interpreted to determine what data the requesting entity is seeking and the information that identifies the entity is analyzed. At 1506 a determination is made regarding whether the requesting entity is authorized to receive requested data (and metadata associated therewith). For example, a security profile may be implemented in an industrial controller, within metadata, or some other data store located remotely or locally. If the entity does not meet the security requirements to access the data, an error code is returned at 1508 indicating that access was not granted to the entity. If, however, the entity is entitled to retrieve the data, the data is packaged with associated metadata at 1510 and is returned back to the requesting entity at 1512.

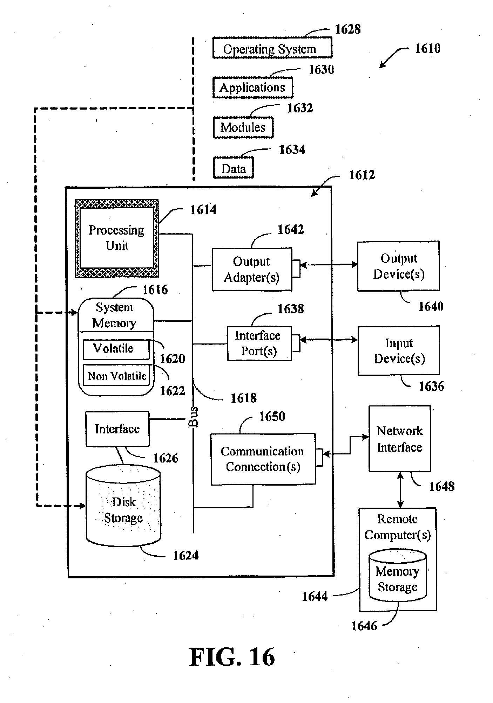

With reference to Fig. 16, an example environment 1610 for implementing various aspects of the claimed subject matter, including dynamically determining a sampling rate at which to sample data on a factory floor, includes a computer 1612. The computer 1612 includes a processing unit 1614, a system memory 1616, and a system bus 1618. The system bus 1618 couples system components including, but not limited to, the system memory 1616 to the processing unit 1614. The processing unit 1614 can be any of various available processors. Dual microprocessors and other multiprocessor architectures also can be employed as the processing unit 1614.

The system bus 1618 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1616 includes volatile memory 1620 and nonvolatile memory 1622. The basic input/output system (BIOS), containing the basic routines to transfer information between elements within the computer 1612, such as during start-up, is stored in nonvolatile memory 1622. By way of illustration, and not limitation, nonvolatile memory 1622 can include read only memory (ROM), programmable ROM (PROM), electrically programmable ROM (EPROM), electrically erasable PROM (EEPROM), or flash memory. Volatile memory 1620 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synch-link DRAM (SLDRAM), and direct Rambus RAM (DRRAM).

Computer 1612 also includes removable/non-removable, volatile/non-volatile computer storage media. Fig. 16 illustrates, for example a disk storage 1624. Disk storage 1624 includes, but is not limited to, devices like a magnetic disk drive, floppy disk drive, tape drive, Jaz drive, Zip drive, LS-100 drive, flash memory card, or memory stick. In addition, disk storage 1624 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1624 to the system bus 1618, a removable or non-removable interface is typically used such as interface 1626.

It is to be appreciated that Fig. 16 describes software that acts as an intermediary between users and the basic computer resources described in suitable operating environment 1610. Such software includes an operating system 1628. Operating system 1628, which can be stored on disk storage 1624, acts to control and allocate resources of the computer system 1612. System applications 1630 take advantage of the management of resources by operating system 1628 through program modules 1632 and program data 1634 stored either in system memory 1616 or on disk storage 1624. It is to be appreciated that the subject invention can be implemented with various operating systems or combinations of operating systems.

A user enters commands or information into the computer 1612 through input device(s) 1636. Input devices 1636 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1614 through the system bus 1618 via interface port(s) 1638. Interface port(s) 1638 include, for example, a serial port, a parallel port, a game port, and a universal serial bus (USB). Output device(s) 1640 use some of the same type of ports as input device(s) 1636. Thus, for example, a USB port may be used to provide input to computer 1612, and to output information from computer 1612 to an output device 1640. Output adapter 1642 is provided to illustrate that there are some output devices 1640 like monitors, speakers, and printers, among other output devices 1640, which require special adapters. The output adapters 1642 include, by way of illustration and not limitation, video and sound cards that provide a means of connection between the output device 1640 and the system bus 1618. It should be noted that other devices and/or systems of devices provide both input and output capabilities such as remote computer(s) 1644.

Computer 1612 can operate in a networked environment using logical connections to one or more remote computers, such as remote computer(s) 1644. The remote computer(s) 1644 can be a personal computer, a server, a router, a network PC, a workstation, a microprocessor based appliance, a peer device or other common network node and the like, and typically includes many or all of the elements described relative to computer 1612. For purposes of brevity, only a memory storage device 1646 is illustrated with remote computer(s) 1644. Remote computer(s) 1644 is logically connected to computer 1612 through a network interface 1648 and then physically connected via communication connection 1650. Network interface 1648 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1650 refers to the hardware/software employed to connect the network interface 1648 to the bus 1618. While communication connection 1650 is shown for illustrative clarity inside computer 1612, it can also be external to computer 1612. The hardware/software necessary for connection to the network interface 1648 includes, for exemplary purposes only, internal and external technologies such as, modems including regular telephone grade modems, cable modems and DSL modems, ISDN adapters, and Ethernet cards.

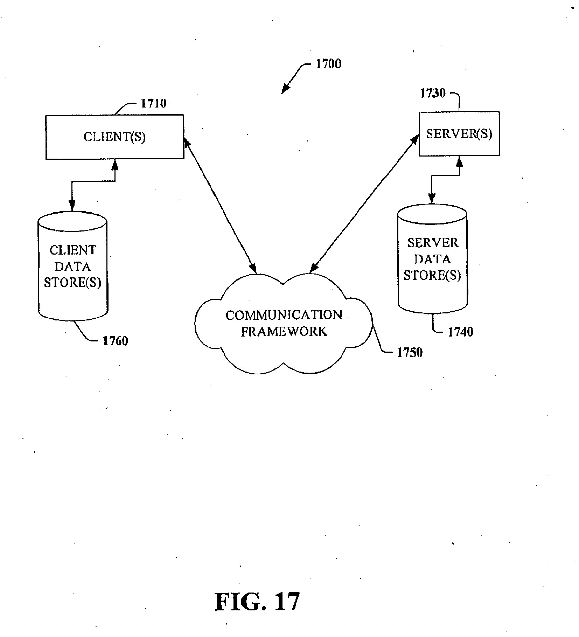

Fig. 17 is a schematic block diagram of a sample-computing environment 1700 with which the subject Invention can interact. The system 1700 includes one or more client(s) 1710. The cllent(s) 1710 can be hardware and/or software (e.g., threads, processes, computing devices). The system 1700 also includes one or more server(s) 1730. The server(s) 1730 can also be hardware and/or software (e.g., threads, processes, computing devices). The servers 1730 can house threads to perform transformations by employing the subject invention, for example. One possible communication between a client 1710 and a server 1730 can be in the form of a data packet adapted to be transmitted between two or more computer processes. The system 1700 includes a communication framework 1750 that can be employed to facilitate communications between the client(s) 1710 and the server(s) 1730. The client(s) 1710 are operably connected to one or more client data store(s) 1760 that can be employed to store information local to the client(s) 1710. Similarly, the server(s) 1730 are operably connected to one or more server data store(s) 1740 that can be employed to store information local to the servers 1730.

It is, of course, not possible to describe every conceivable combination components or methodologies for purposes of describing the claimed subject matter, but one of ordinary skill in the art may recognize that many further combinations and 25 permutations are possible. Accordingly, the claimed subject matter is intended to embrace all such alterations, modifications and variations that fall within the scope of the appended claim. Furthermore, to the extent that the term "includes" is used in either the detailed description or the claims, such term is intended to be inclusive in a manner similar to the term "comprising" as "comprising" is interpreted when employed as a transitional word in a claim.
In summary an industrial automation device includes a 35 receiver component that receives a request for structured data retained within the industrial controller. A location component that locates metadata associated with the requested structured data and transmits the data to a requesting entity. For example, the industrial automation 40 device can be an industrial controller, a proxy device, a type library, etc.

## Claims

1. A system that associates metadata with existing data structures in a legacy industrial automation controller, comprising:
a legacy industrial automation controller (1002); and
a proxy component (1004), comprising
a metadata store (1012) for storing metadata that describes underlying data structures in the legacy industrial automation controller;
a receiver component (1010) for receiving a request for structured data;
an interface component (1008) for retrieving structured data according to the request from the legacy industrial automation controller (1002); and
a packaging component (1014) for retrieving appropriate metadata for the underlying data structure from the metadata store (1012) upon receiving the request for structured data, appending it to the data received from the legacy industrial automation controller (1002) and sending the packaged structured data and associated metadata back to the requesting entity.

## Patentansprüche

1. System, das Metadaten mit vorhandenen Datenstrukturen in einer vorhandenen industriellen Automations-Steuereinrichtung assoziiert, umfassend:
eine vorhandene industrielle Automations-Steuereinrichtung (1002); und
eine Proxy-Komponente (1004), umfassend
einen Metadatenspeicher (1012) zum Speichern von Metadaten, die zugrundeliegende Datenstrukturen in der vorhandenen industriellen Automations-Steuereinrichtung beschreiben;
eine Empfängerkomponente (1010) zum Empfangen einer Anfrage für strukturierte Daten;
eine Schnittstellenkomponente (1008) zum Abrufen strukturierter Daten gemäß der Anfrage von der vorhandenen industriellen Automations-Steuereinrichtung (1002); und
eine Zusammenpackungskomponente (1014) zum Abrufen von entsprechenden Metadaten für die zugrundeliegende Datenstruktur vom Metadatenspeicher (1012) nach dem Empfangen der Anfrage für strukturierte Daten, ihrem Anhängen an die von der vorhandenen industrielle Automations-Steuereinrichtung (1002) empfangenen Daten und Senden der zusammengepackten strukturierten Daten und assoziierten Metadaten zurück an die anfragende Einheit.

## Revendications

1. Système qui associe des métadonnées avec des structures de données existantes dans un contrôleur d'automatisation industrielle hérité, comprenant :
un contrôleur d'automatisation industrielle hérité (1002); et
un composant proxy (1004), comprenant
un magasin de métadonnées (1012) pour stocker des métadonnées qui décrivent des structures de données sous-jacentes dans le contrôleur d'automatisation industrielle hérité;
un composant récepteur (1010) pour recevoir une demande de données structurées;
un composant d'interface (1008) pour extraire des données structurées en fonction de la demande du contrôleur de l'automatisation industrielle hérité (1002); et
un composant d'emballage (1014) pour récupérer des métadonnées appropriées pour la structure de données sous-jacentes du magasin de métadonnées (1012) lors de la réception de la demande de données structurées, en l'attendant avec les données reçues du contrôleur de l'automatisation industrielle hérité (1002); et
l'envoi des données structurées emballées et les métadonnées associées à l'entité demandeuse.
